# EUROPEAN PATENT APPLICATION

(11) **EP 1 491 873 A1**
(43) Date of publication of application: **29.12.2004**
(21) Application number: 03360077.6
(22) Date of filing: 25.06.2003
(51) Int. Cl.: G01M 3/38

(54) **Optical fiber sensor cable**

(71) Applicant: ALCATEL, 75008 Paris (FR)
(72) Inventor: Leppert, Hans-Detlef, 41189 Mönchengladbach (DE)
(74) Representative: Dohmen, Johannes Maria Gerardus

(57) **Abstract**

An optical fiber sensor cable (2) for detecting fluids comprises a PCS fiber (3) passing through a housing (4) made of rigid material for increasing the mechanical stability of the PCS fiber (3), wherein the housing (4) is provided with at least one aperture (5) allowing fluid to pass through the housing (4) and to diffuse into the plastic cladding of the PCS fiber (3), causing a local attenuation of light transmitted by the PCS fiber (3) which is indicative of the presence of fluid. Such an optical fiber sensor cable (2) may be used in harsh environments in particular for the detection of liquids containing carbon hydroxyl groups.

## Description

### Background of the invention

The invention relates to an optical fiber sensor for detecting fluids comprising a plastic-clad silica (PCS) fiber which is at least partially surrounded by a housing.

Fluid sensors are used in a wide variety of industrial applications. Of particular importance are fluid sensors used in environments where the presence of even a small amount of fluid is undesirable or dangerous. Electronic fluid sensors suffer from several disadvantages. Electronic sensors must be heavily shielded from electromagnetic interference which can distort the sensor readings. Furthermore, electronic sensors emit electrical signals which may interfere with other sensitive electronic equipment. Electronic sensors have a limited temperature operating range because high or low temperatures have a significant effect on sensitive electronic components. They may suffer from channel crosstalk or other phenomena associated with transmitting electrical signals over long distances. When used in extremely volatile environments, electronic sensors may be unsafe as even a small spark in the sensor may create a dangerous condition. This is particularly true if the fluids to be detected are liquids containing carbon hydroxyls or hydrocarbon gases.

An optical liquid sensing system for sensing liquids in contact with an optical sensing component is described in US 5,684,296. The sensing system comprises an optical sensor connected to a control module by a fiber optic cable having two fiber optic strands, the first for receiving light emitted by the control module, and the second for receiving light reflected from a distal reflector. The strands terminate in a longitudinally oriented common ferrule within the optical sensor. The optical sensor is generally cylindrical and includes a distal reflector opposite and in a spaced relationship to the ferrule. A group of apertures is defined in the circumferential wall of the housing so as to permit entry of liquid into the housing and to draw liquid proximally located to the sensor into the housing via capillary action. When an amount of liquid insufficient to flood the sensor enters the housing, the shape of the sensor and the arrangement of interior components of the sensor cause the liquid to be formed into a liquid cylinder spanningly disposed between the ferrule and the reflector. The reflective inner surface of the liquid cylinder causes the amplitude of a light signal introduced into the housing by the first strand to be increased in amplitude before being received by the second strand. When the sensor is flooded with liquid, the light signal from the first strand is attenuated before being received by the second strand. The control module detects variances in the amplitude of light received by the second strand when the sensor is in contact with or is flooded by a liquid and indicates to a user that presence of a liquid has been detected by the sensor.

An alternative solution is described in JP 11094688. The outer circumference of an optical fiber is coated with a strength reducing resin layer. Two linear elastic bodies (coil springs) are contained inside the resin layer (or outside) in parallel along the optical fiber, in a state where a tension is applied, to form the optical fiber liquid detecting sensor. A long chain alkyl acrylate resin or the like is used for the strength reducing resin when the inspecting object is a liquid oil, a polyamide resin is used in the case of an acidic liquid, and a cellulose resin, a polyvinyl alcohol or the like is used in the case of common use for an acidic liquid and an alkaline liquid. Though the optical fiber is a straight line normally, the resin layer starts immediately softening with adhering of gasoline or the like, and the elastic body is contracted in accompaniment to the softening to curve the optical fiber with a large curvature. This results in an increase in light transmission loss, indicating a liquid leak.

The solutions suggested do not allow a high spatial resolution indicating the location of the leak and are rather complicated in their construction.

### Object of the invention

It is the object of the invention to provide a method and a sensor for reliably detecting fluids in harsh environments.

### Short description of the invention

This object is achieved by an optical fiber sensor for detecting fluids comprising a plastic-clad silica (PCS) fiber which is, between its ends, at least partially surrounded by a housing suitable for improving the mechanical stability of the PCS fiber, wherein the housing is at least partially permeable to a fluid, such as to allow access of the fluid to the PCS fiber within the housing and diffusion of the fluid into the cladding of the PCS fiber.

A PCS fiber is an optical fiber that has a silica-based core and a plastic, i.e. polymer, cladding. The aperture or apertures in the housing allow fluids to reach the cladding of the PCS fiber and to diffuse into the cladding of the PCS fiber. The cladding constitutes a coating of the optical fiber. The fluid in the cladding causes a change of refractive index in the cladding, inducing a weaker guiding of light transmitted by the PCS fiber and therefore a higher attenuation at the location of the aperture. The housing may be of a fairly rigid material so as to increase the stability of the PCS fiber and to protect the PCS fiber. Thus, the inventive sensor may be used in harsh environments. Advantageously, the optical fiber sensor may be located adjacent to oil pipelines or oil and kerosine reservoirs, since it is particularly suited for the detection of liquids containing carbon hydroxyl. If the housing is permeable to fluids over its entire length, p. ex. if the housing has a mesh-like configuration, leaks may be detected along the entire length of for example a pipeline to be monitored. Whereas in the state of the art a considerable time may pass before the detection of a leak because the distinct fluid sensors are spaced apart along a pipeline or fluid conduit, leaks may be detected earlier with the inventive sensor since it may cover the entire length of a conduit due to its longitudinal and cable-like configuration. Due to this configuration the inventive sensor may also be denominated as optical fiber sensor cable. The length of the housing may be adapted to the intended use of the optical fiber sensor.

In a preferred embodiment the housing is provided with one or several apertures or holes which may have an arbitrary distribution. The number of apertures is only limited by the required stability of the housing. The more apertures there are provided, the better the spatial resolution for detecting the leaks and the quicker the detection of a fluid. The apertures do not need to be at predetermined and known locations along the length of the housing since the location of the fluid and thus of the leak may be determined from assessing the attenuation of light transmitted by the PCS fiber. The apertures may be designed such as to provide a capillary action and to support transport of fluids to the PCS fiber. However, the distribution and density of apertures may also be selected according to the application of the sensor. For example, several apertures or one aperture extending along the entire length, or longitudinally over large parts of the housing may be provided.

The housing may be a coating directly adjacent to the PCS fiber. Such a sensor has a small diameter since the PCS fiber extending within the housing and the inside of the housing are not spaced apart. Such a coating also provides for a fast transport of a fluid to the PCS fiber.

In a particularly preferred embodiment the housing is made of metal. Such housings provide for a good stability and protection of the PCS fiber. The housing may have a tube-like configuration and may be laser welded.

It is particularly advantageous if the housing is made of stainless steel. Stainless steel is highly resistive to corrosion and can hence be used in environments where aggressive fluids are expected. Furthermore, stainless steel provides for a high mechanical stability of the optical fiber sensor.

Alternatively, the housing may be made of a metal foil having an overlapping region. This measure allows easy fabrication of the sensor since the metal foil may be wrapped around the PCS fiber.

Generally, the housing may be made of any material resistant to the fluids to be detected and/or the (harsh) environment in which the sensor is to be used. Suitable materials are, p. ex., polyethylene (PE), polyvinylchloride (PVC), and polyamide (PA).

The fabrication is further facilitated if at least one aperture is formed as longitudinal gap in the overlapping region. Hence, no additional manufacturing steps for forming the apertures are needed. The longitudinal gap may extend over large parts or the entire length of the PCS fiber, in particular in the sensing region. Hence, leaks may be detected along the entire sensing region or even the entire length of the PCS fiber.

Advantageously the sensor cable is connected to a light source and an attenuation detection means for detecting the attenuation of light in the PCS fiber due to fluid diffusing into the plastic cladding. The light from the light source may be coupled into the PCS fiber at one end and detected by the detection means at the other end. Alternatively, the light may be reflected at the other end and transmitted back to the end where light is coupled into the PCS fiber. In both cases the attenuation of light is determined by the detection means, and from a variation in attenuation, in particular a deviation from an expected attenuation, the presence of fluid may be detected. The detection means may further comprise means or be associated with means for determining the temporal and spatial resolution of the attenuation in order to determine the location of the fluid entering the housing and thus the location of a leak.

Preferably, the sensor cable, in particular the PCS fiber, is connected to the light source and detector of an optical time domain reflectometer (OTDR). The OTDR sends light pulses into the PCS fiber and measures the intensity of the reflected and scattered light with a high time resolution at the same end of the PCS fiber. Such an instrument uses backscattering for the detection of deviations of the fiber attenuation. If the cladding of the PCS fiber contains a fluid at a certain location, the attenuation of the backscattered light at this location changes. From the measured intensity and the measured fiber length the location of the attenuation along the fiber can be determined. With this knowledge and the known arrangement of the fiber, p.ex. surrounding a tank or extending along a pipeline, the location of the fluid can be determined.

The object is also achieved by a method of detecting fluids by means of an optical fiber sensor, wherein light is coupled into a PCS fiber, and light transmitted by the PCS fiber is received, and changes in the attenuation of light are determined. The inventive method allows detection of fluids in harsh environments such as the vicinity of oil pipelines.

In a preferred variant of the inventive method the time and location of the detected fluid are determined from the changes in attenuation. Thus, the method allows for a good temporal and spatial resolution of the attenuation detected. This allows to locate the presence of fluids. Dangerous liquids or gases can be quickly detected and, if necessary, emergency measures can be implemented rapidly.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawings

The invention is shown in the drawing.
- **Fig. 1**: shows a schematic representation of an optical fiber sensor system;
- **Fig. 2**: shows a perspective view of an optical fiber sensor; and
- **Fig. 3**: shows a cross-section through a second embodiment of an optical fiber sensor.

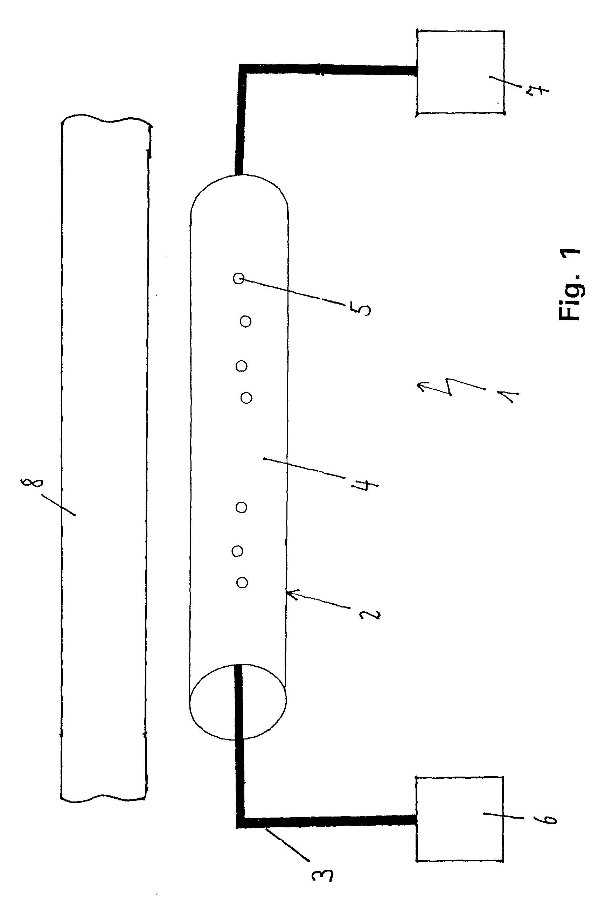

**Fig. 1** shows schematically an optical fiber sensor system **1** comprising an optical fiber sensor **2**. The optical fiber sensor **2** consists of a PCS fiber **3** which passes at least in the sensing region through a sleeve-like housing **4**. The housing **4** is provided with apertures **5** in random distribution along its length. At one end light is coupled in to the PCS fiber 3 by a light source **6**, in particular by the light source of an OTDR. The light is transmitted by the PCS fiber 3 and received by the detection means **7** located at the other end of the PCS fiber **3**. The optical fiber sensor is disposed parallel to a pipeline **8** carrying a fluid. If there is a leak in the pipeline 8, fluid exits the pipeline 8 and passes through one or several apertures 5 of the housing 4, thus reaching the external surface of the PCS fiber 3 within the housing 4. The cladding of the PCS fiber 3 is made of a polymer and the fluid can diffuse into the cladding, thereby changing the refractive index of the cladding. This results in an attenuation of the light coupled into and transmitted by the PCS fiber 3. The attenuation is detected by the detection means 7. The detection means further comprises means for determining the spatial and temporal resolution of the attenuation. Thus, by determining the local attenuation the location of the fluid and thus of the leak may be determined. Whereas in Fig. 1 the housing 4 is shown to surround the PCS fiber 3 only in a section between the light source 6 and the detection means 7, the housing may be present over the entire length of the PCS fiber. Furthermore, the optical fiber sensor 2 may extend along the entire length of the pipeline 8, thus enabling the monitoring of the pipeline 8 over its entire length. Furthermore, the light source 6 and the detection means 7 may be located at the same end of the PCS fiber 3 and a reflector may be located at the other end of the PCS fiber 3.

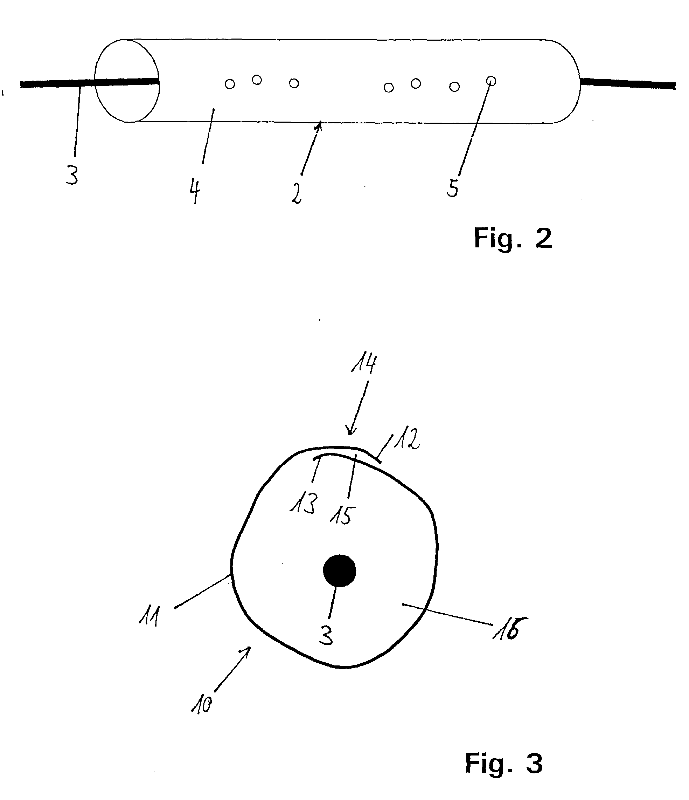

Fig. **2** shows the optical fiber sensor 2 of Fig. 1. The housing 4 is embodied as a laser welded stainless steel tube with distinct apertures 5, which may also be called holes or perforations. The apertures 5 have an arbitrary distribution, but cover the housing 4 in axial direction. The size and form of the apertures 5 depends on the application of the optical fiber sensor and the fluids to be detected. The PCS fiber 3 is fed through the housing 4. The sensing region in which the PCS fiber is protected by the housing 4 and in which fluids can be detected, is defined by the axial extension of the housing 4.

A cross section through an alternative embodiment of an optical fiber sensor **10** is shown in Fig. **3**. The PCS fiber 3 is surrounded by a housing **11** embodied as metal foil. The housing has two ends **12, 13,** which form an overlapping region **14**. Between the overlapping ends 12, 13 a gap is provided, which constitutes a longitudinal aperture **15.** Fluid may pass through the aperture 15 into the interior space **16** of the housing 11. Thus, fluid may reach the PCS fiber 3 and diffuse into the plastic cladding of the PCS fiber 3, causing locally an attenuation of the light, or more generally the electromagnetic radiation, transmitted through the PCS fiber 3.

An optical fiber sensor cable (2) for detecting fluids comprises a PCS fiber (3) passing through a housing (4) made of rigid material for increasing the mechanical stability of the PCS fiber (3), wherein the housing (4) is provided with at least one aperture (5) allowing fluid to pass through the housing (4) and to diffuse into the plastic cladding of the PCS fiber (3), causing a local attenuation of light transmitted by the PCS fiber (3) which is indicative of the presence of fluid. Such an optical fiber sensor cable (2) may be used in harsh environments in particular for the detection of liquids containing carbon hydroxyl groups.

## Claims

1. Optical fiber sensor (2, 10) for detecting fluids comprising a plastic-clad silica (PCS) fiber (3) which is, between its ends, at least partially surrounded by a housing (4, 11) suitable for improving the mechanical stability of the PCS fiber (3), wherein the housing (4, 11) is at least partially permeable to a fluid, such as to allow access of the fluid to the PCS fiber (3) within the housing and diffusion of the fluid into the cladding of the PCS fiber.

2. Sensor according to claim 1, **characterized in that** the housing (4, 11) is provided with one or several apertures, in particular with arbitrary distribution.

3. Sensor according to claim 1, **characterized in that** the housing (4, 11) is a coating directly adjacent to the PCS fiber (3).

4. Sensor according to claim 1, **characterized in that** the housing (3) is made of metal.

5. Sensor according to claim 2, **characterized in that** the housing (3) is made of stainless steel.

6. Sensor according to claim 2, **characterized in that** the housing (3) is made of metal foil having an overlapping region (14).

7. Sensor according to claim 6, **characterized in that** at least one aperture (15) is formed as longitudinal gap in the overlapping region (14).

8. Sensor according to claim 1, **characterized in that** the sensor (2, 10) is connected to a light source (6) and an attenuation detection means (7) for detecting the attenuation of light in the PCS fiber (3) due to fluid diffusing into the plastic cladding of the PCS fiber (3).

9. Method of detecting fluids by means of a an optical fiber sensor (2, 10) according to claim 1, wherein light is coupled into the PCS fiber (3), and light transmitted by the PCS fiber (3) is received, and changes in the attenuation of the transmitted light are determined.

10. Method according to claim 9, **characterized in that** from the changes in attenuation the time and location of the detected fluid are determined.
